# EUROPEAN PATENT SPECIFICATION

(11) **EP 1 778 956 B1**
(45) Date of publication and mention of the grant of the patent: **30.09.2009**
(21) Application number: 05767591.0
(22) Date of filing: 02.08.2005
(51) Int. Cl.: F01N 11/00, F01N 9/00, F01N 3/022

(54) **METHOD AND APPARATUS FOR FILTER CONDITION INSPECTION**
VERFAHREN UND VORRICHTUNG ZUR INSPEKTION EINES FILTERZUSTANDS
PROCÉDÉ ET APPAREIL POUR INSPECTION DE L'ÉTAT D'UN FILTRE

(30) Priority: 07.08.2004 GB 0417625
(43) Date of publication of application: 02.05.2007
(73) Proprietor: Eminox Limited, The Old Court House Gainsborough Lincolnshire DN21 2BE (GB)
(72) Inventor: WATKINS, Andrew, Litton, Derbyshire SK17 8QP (GB)
(74) Representative: Lacey, Dean Andrew
(86) International application number: PCT/GB2005/003020
(87) International publication number: WO 2006/016117

(56) References cited:
- EP-A- 0 506 083
- EP-A- 0 675 267

## Description

The invention relates to a method and apparatus for inspecting the condition of a filter for a vehicle exhaust system. The invention is particularly applicable to the inspection of wall flow filters such as continuously regenerating diesel particulate filters (CR-DPFs).

Modern diesel powered vehicle exhaust systems are often provided with filters for removing particulate matter from the vehicle's exhaust stream. These are typically wall flow filters which are cylindrical ceramic monoliths having elongate channels running along their length, parallel to the axis of the cylinder. The channels are alternately plugged at their ends such that gas entering a channel at one end cannot exit the same channel at its other end. To exit, the gas must pass from one channel to the next through the porous walls of the filter. In so doing, the soot and ash within the gas is trapped on the walls of the filter.

A preferred filter for a modern diesel exhaust system is a continuously regenerating diesel particulate filter, in which exhaust heat and gases from the engine are used to cause the particulate matter to burn off the filter, thereby regenerating the filter.

The above described wall flow filters can become contaminated with soot and ash in the course of their operation on heavy duty diesel powered vehicles. Under normal conditions at elevated operating temperatures such filters regenerate themselves and effectively self-clean, by soot being burnt out of the filter. However, under adverse conditions, for example where the vehicle undertakes a large amount of city driving where high temperatures of exhaust gases are not reached, or after prolonged use, the filter can become blocked. Once the filter is blocked, even locally, it can experience an exothermic reaction which burns the material of the filter. If this happens, the integrity of the filter is damaged and its effectiveness reduced. One way to prevent this is through a regular maintenance regime which includes periodic, typically annual, cleaning.

The applicant has appreciated that, as part of the servicing and cleaning regime, it would be desirable to assess the condition of the filter prior to and after cleaning to identify imperfect cleaning and potential flaws or damage which might cause the filter to be unfit for use.

It is known to provide microwave generating devices such as those described in European patent application numbers EP 0 506 083 and EP 0 675 267. Such device detect a bulk quantity of particulate matter within the filter to determine whether to initiate a cleaning cycle. However, such devices do not provide means of assessing the condition of the filter after cleaning.

According to the invention there is provided a method of inspecting a filter for a vehicle exhaust system, the method including the steps of providing a source of electromagnetic radiation, transmitting electromagnetic radiation through the filter, detecting radiation which has been transmitted through the filter to form an image of a pattern of transmitted radiation, the pattern of transmitted radiation providing an indication of the condition of the filter, **characterised in that** the image of the pattern of transmitted radiation includes shades of colour or tone representing varying extents of transmission of radiation through different parts of the filter.

The image may include a range of different colours or tones, each colour or tone representing a different amount of transmitted radiation. Preferably, the image includes at least 10 different colours or tones and most preferably, the image contains at least 200 different colours or tones.

The method is particularly applicable to inspecting a filter made of a porous material, which may be a ceramic material. The filter may be a wall flow filter including elongate channels running from one end to its opposite end, along its length, the channels being alternately plugged at their ends so that gas entering a channel at one end cannot exit the same channel at the opposite end, but instead must pass from one channel to the next through the porous filter material. Such filters are typically cylindrical, including a central axis which is parallel to the length of the channels but may be of other cross sectional shapes. The porous material of such filters is typically crystalline, and may comprise cordierite or silicon carbide. The wall flow filter could be a diesel particulate filter.

The filter is preferably held still whilst the radiation is transmitted through it.

The source of electromagnetic radiation may be selected to produce frequencies of radiation which are transmitted through the crystals of a porous crystalline material, in addition to being transmitted through the pores.

Preferably the radiation is transmitted uniformly, rather than being pulsed.

Where the filter is a wall flow filter, the method preferably includes the step of providing the source of radiation at one end of the filter, and detecting the pattern of transmitted radiation at the opposite end of the filter, at least some of the detected radiation thereby having travelled along the direction of the channels.

The electromagnetic radiation may include ultra violet light in the 350 to 400 nm range and/or visible light in the 400 to 450 nm and/or 650 to 700 nm range and/or infrared radiation in the 1400 to 1800 nm range. This is particularly applicable to a cordierite filter.

Alternatively or additionally, the electromagnetic radiation may include radiation in the 420 to 800 nm range, this including some visible and some infrared radiation. This is particularly applicable to a silicon carbide filter.

The method may include the use of a lamp or an array of lamps, to provide the source of the electromagnetic radiation, which may include ultra violet, visible and/or infrared radiation.

The method may include the use of one or more tungsten halogen lamps, which may be halogen mirror lamps including an integral reflector.

Alternatively or additionally, the method may include the use of one or more halogen tubes, being elongate halogen lamps.

Alternatively or additionally, the method may include the use of one or more metal halide lamps such as high intensity discharge lamps, xenon lamps or hydrargyrum medium-arc iodine lamps.

Alternatively or additionally, the method may include the use of one or more laser diodes or high power LEDs.

The method may include the step of providing an array of radiation sources such that radiation is provided for simultaneous transmission through the whole filter. Alternatively, a single radiation source or an array of radiation sources insufficient to provide radiation for transmitting through the entire filter may be provided and the method may include the step of moving these radiation sources to scan over the entire end of the filter.

The method may include the step of using the human eye to detect the pattern of transmitted radiation and form the image. In this case, the light source preferably produces light at least in the 507 to 555 nm wavelength range.

Alternatively, the method may include the step of using a camera to detect the pattern of transmitted radiation and form the image. The camera may include an array of charge-coupled devices (CCDs).

The method may include the use of a complementary metal-oxide semi-conductor (CMOS) array camera for detecting the pattern of transmitted radiation and forming the image.

The camera may produce an image comprising an array of pixels, at least one pixel being provided for each channel of the filter. Preferably, at least 25 pixels, and most preferably at least 90 pixels, are provided for each channel of the filter.

Alternatively, the method may include the use of a focal plane array detector for detecting the pattern of transmitted radiation and forming the image. Such a detector is sensitive to radiation with a wavelength of between 700 and 1400 nm, i.e. infrared radiation.

The method may include the use of an array of detectors for simultaneously detecting radiation transmitted through substantially the whole filter. Alternatively, the method may include the use of a single radiation detector, which is moved over the filter to sequentially detect radiation which has been transmitted through different parts of the filter. Alternatively, the method may include the use of a linear array of detectors, which are moved in one dimension only over the end of the filter, preferably in a direction perpendicular to the length of the array, to sequentially detect radiation transmitted through different parts of the filter.

The method may include the use of an array of radiation detectors mounted on an arm which has one of its ends mounted on a pivot. Where the filter is cylindrical, the pivot may coincide with the central axis of the filter.

The method may include rotation of the pivot to sweep the detectors over the whole of the end of the filter. The radiation source may be of a fixed type covering the whole of the opposite end of the filter or may be moved in a synchronised manner with the detector.

The method may further include the step of analysing the image of the pattern of transmitted radiation to provide an indication of the condition of the filter. The analysis may be carried out visually, by inspecting a visual image of the transmitted radiation. Alternatively, the method may include the use of a processor to analyse an image of the transmitted radiation.

The analysis may include a comparison of the image of the transmitted radiation with an image of transmitted radiation for an equivalent undamaged filter. The undamaged filter could be theoretical or the image could be produced by transmitting electromagnetic radiation through a filter which is known to be undamaged.

The analysis may include a comparison of the image of the transmitted radiation with an image of transmitted radiation for a filter which just passed a suitability test and/or a filter which just failed a suitability test.

The analysis may include analysing individual cells or groups of cells in the image, each cell corresponding with a channel in the filter.

The comparison may include checking for areas of the filter in which the image shows that more or less radiation has been transmitted through the filter being inspected than would be transmitted through the undamaged filter.

The relative brightness and darkness of different areas of the image may be analysed.

Preferably the analysis allows the condition of the filter to be determined along a spectrum of acceptability.

According to the invention there is further provided an apparatus for inspecting a filter for a vehicle exhaust system, the apparatus including:
a source of electromagnetic radiation;
means for mounting the filter such that radiation from the radiation source is transmitted through the filter to form a pattern of transmitted radiation; and
a radiation detector positioned to detect radiation transmitted through the filter such that an image of a pattern of transmitted radiation may be formed, the pattern of transmitted radiation providing an indication of the condition of the filter, **characterised in that** the radiation detector is capable of forming an image of the pattern of detected radiation, the image including shades of colour or tone representing varying extents of transmission of radiation through the filter.

The apparatus is particularly suitable for inspecting a filter as previously described.

The filter may be made of a porous crystalline material, and the radiation source may be capable of producing frequencies of radiation which are transmitted through the crystals of the porous crystalline material, in addition to being transmitted through the pores.

The radiation source, the mounting means and the radiation detector may be positioned such that a wall flow filter may be mounted with the radiation source at one end of the filter and the radiation detector at the opposite end of the filter, such that in use at least some of the detected radiation has travelled along the direction of the channels of the filter.

The radiation source may produce ultra violet light in the 350 to 400 nm range and/or visible light in the 400 to 450 nm and/or 650 to 700 nm range and/or infrared radiation in the 1400 to 1800 nm range. This is particularly applicable to a cordierite filter.

Alternatively or additionally, the radiation source may produce radiation in the 420 to 800 nm range, this including some visible and some infrared radiation. This is particularly applicable to a silicon carbide filter.

The radiation source may include a lamp or an array of lamps, which may produce ultra violet, visible and/or infrared radiation.

Alternatively, the radiation source may include one or more tungsten halogen lamps, which may be halogen mirror lamps including an integral reflector.

Alternatively or additionally, the radiation source may include one or more halogen tubes, being elongate halogen lamps.

Alternatively or additionally, the radiation source may include one or more metal halide lamps such as high intensity discharge lamps, xenon lamps or hydrargyrum medium-arc iodine lamps.

Alternatively or additionally, the radiation source may include one or more laser diodes or high power LEDs.

The apparatus may include an array of radiation sources such that radiation may be provided for transmission through the whole filter element. Alternatively, the apparatus may include a single radiation source or an array of radiation sources insufficient to provide radiation for transmitting through the entire filter and means for moving these radiation sources to scan over the entire end of the filter.

The radiation detector may include a camera. The camera may include an array of charge-coupled devices (CCDs).

Alternatively, the radiation detector may include a complementary metal-oxide semi-conductor (CMOS) array camera.

Alternatively, the radiation detector may include a focal plane array detector. Such a detector is sensitive to radiation with a wavelength of between 700 and 1400 nm, i.e. infrared radiation.

The radiation detector may include an array of individual detectors for simultaneously detecting radiation transmitted through substantially the whole filter. Alternatively, the radiation detector may include a single detector, which may be moved over the filter to sequentially detect radiation which has been transmitted through different parts of the filter. Alternatively, the radiation detector may include the use of a linear array of detectors, which may be moved in one dimension only over the end of the filter, preferably in a direction perpendicular to the length of the array, to sequentially detect radiation transmitted through different parts of the filter.

The radiation detector may include an array of individual detectors mounted on an arm which has one of its ends mounted on a pivot. Where the filter is cylindrical, the pivot may coincide with the central axis of the filter.

The apparatus may further include a processor for analysing the pattern of transmitted radiation to provide an indication of the condition of the filter.

The processor may include means for making a comparison of the image of the transmitted radiation with an image of transmitted radiation for an equivalent undamaged filter. The undamaged filter could be theoretical or the image could be produced by transmitting electromagnetic radiation through a filter which is known to be undamaged.

The comparison may include checking for areas of the filter in which the image shows that more or less radiation has been transmitted through the filter being inspected than would be transmitted through the undamaged filter.

Embodiments of the invention will be described for the purpose of illustration only with reference to the accompanying drawings in which:-
Fig. 1A is a diagrammatic sectional illustration of a wall flow filter such as a continuously regenerating diesel particulate filter (CR-DPF); and Fig. 1B is a diagrammatic section of part of the filter of Fig. 1A, showing the gas flow through the filter;
Fig. 2 is a diagrammatic view of a basic apparatus according to the invention;
Fig. 3A is a diagrammatic image of an undamaged filter and 3B is a diagrammatic images of both an undamaged and a damaged filter;
Fig. 4 is a diagrammatic detail view of the crystal structure of the material of the filter of Fig. 1;
Fig. 5A is a graph showing the relative radiation absorption rates for a typical material from which the filter of Fig. 1 may be manufactured; and Fig. 5B is similar to Fig. 3A except that three crystal phases of the material are shown separately;
Fig. 6 is a similar diagram to Figs. 3A and 3B but for an alternative filter material.
Figs. 7A to 7D are diagrammatic illustrations of various radiation sources;
Fig. 8 is a graph showing the spectral energy distribution for a halogen lamp radiation source;
Fig. 9 is a graph showing the spectral energy distribution of an alternative radiation source;
Fig. 10 is a diagrammatic illustration of an alternative radiation source;
Fig. 11 is a graph showing the spectral energy distribution of the radiation source of Fig. 10;
Fig. 12 is a human eye response curve; .
Fig. 13 is a diagrammatic illustration of a way of detecting radiation transmitted through a filter;
Fig. 14 is a diagrammatic illustration of an alternative apparatus according to the invention;
Fig. 15 is a diagrammatic illustration of a further way of detecting radiation transmitted through a filter;
Fig. 16 is a diagrammatic illustration of an alternative apparatus according to the invention;
Fig. 17 is a diagrammatic illustration of an alternative apparatus according to the invention; and
Figs. 18A to 21E are illustrations of computer simulated representations of transmitted radiation.

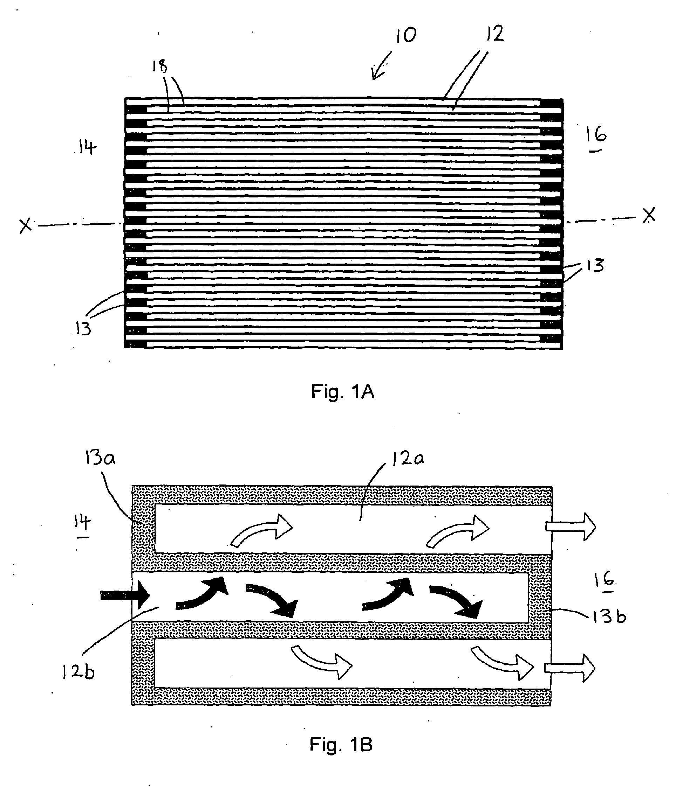

Referring to Figs. 1A and 1B, there is illustrated in diagrammatic cross section a filter 10 for a vehicle exhaust system. The filter 10 is a "wall flow filter" which comprises a cylindrical body formed from porous material, usually ceramic material which may be cordierite or silicon carbide. The cylindrical body is formed to include a plurality of parallel channels 12, usually of a rectangular cross section. The channels 12 extend parallel to a central axis X-X of the cylindrical body, substantially from one end 14 of the filter 10 to the opposite end 16. The channels are separated by walls 18 of the porous, ceramic material of the filter.

The filter 10 is formed such that alternate ends of the channels 12 are blocked by end plugs 13 formed of the same ceramic material as the remainder of the filter 10. Each channel is therefore open at one of its ends (say at the end 14 of the filter) and closed at its opposite end (say at the end 16 of the filter). An adjacent channel would be open at the end 16 of the filter and closed at the end 14 of the filter.

In Fig. 1B, it may be seen that the channel 12a is open at the end 16 of the filter 10 and closed by a plug 13a at the end 14 of the filter 10 whilst adjacent channel 12b is open at the end 14 of the filter and closed by a plug 13b at the end 16.

The wall flow filter 10 is a standard component used in the automotive industry to remove particulate matter from vehicle exhaust streams. The exhaust passes through the filter 10 from one end 14 to the opposite end 16, through the channels 12. Because the channels are alternately plugged as described above, gas entering one channel cannot exit the same channel at the opposite end of the filter, and instead must pass to adjacent channels through the porous walls 18 of the filter, as illustrated in Fig. 1B. In so doing, particulate matter in the form of soot or ash within the exhaust gases is trapped in the walls of the filter.

The wall flow filter would typically be used in a heavy duty diesel powered vehicle. Over time, the filter 10 will become contaminated with the soot and ash which is filtered from the exhaust stream. A continuously regenerating diesel particulate filter (CR-DPF) is designed such that heat from the vehicle exhaust causes the filter to self clean by nitrogen dioxide reacting with the soot to "burn" it off the filter. However, under adverse conditions, for example if the vehicle exhaust does not routinely reach sufficiently high temperatures, or after prolonged use, the filter can become blocked. This can cause an exothermic reaction which burns the material of the filter. Blockages, and/or the subsequent damage to the filter material, can damage the integrity of the filter and impair its performance.

In view of the above, there is a requirement for regular maintenance and cleaning of the filters. The applicant has appreciated that, as part of the maintenance and cleaning process, it would be desirable to assess the condition of the filter prior to and after cleaning, and to identify imperfect cleaning or damage which might mean that the unit was unfit for service.

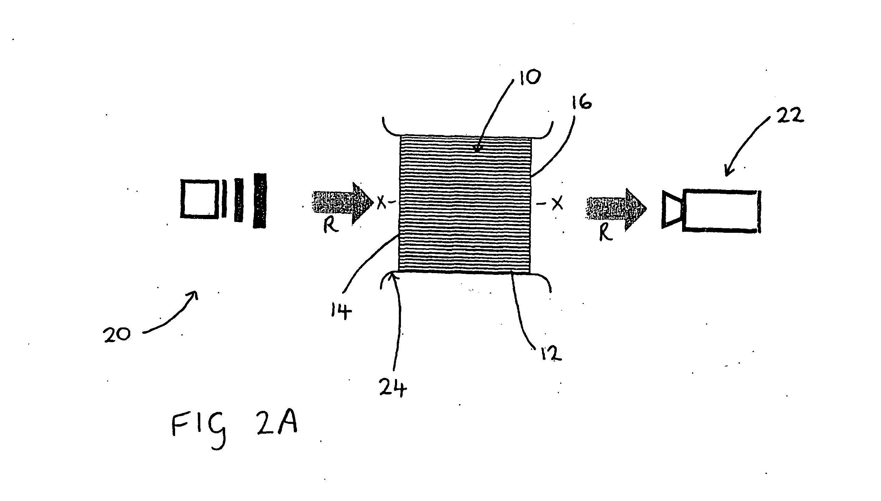

Referring to Fig. 2A, there is illustrated a basic apparatus according to the invention. The apparatus includes a radiation source 20, a radiation detector 22 and support means 24 for supporting a tubular CR-DPF filter 10 between the radiation source 20 and the radiation detector 22. The filter 10 is as described above with reference to Figs. 1A and 1B.

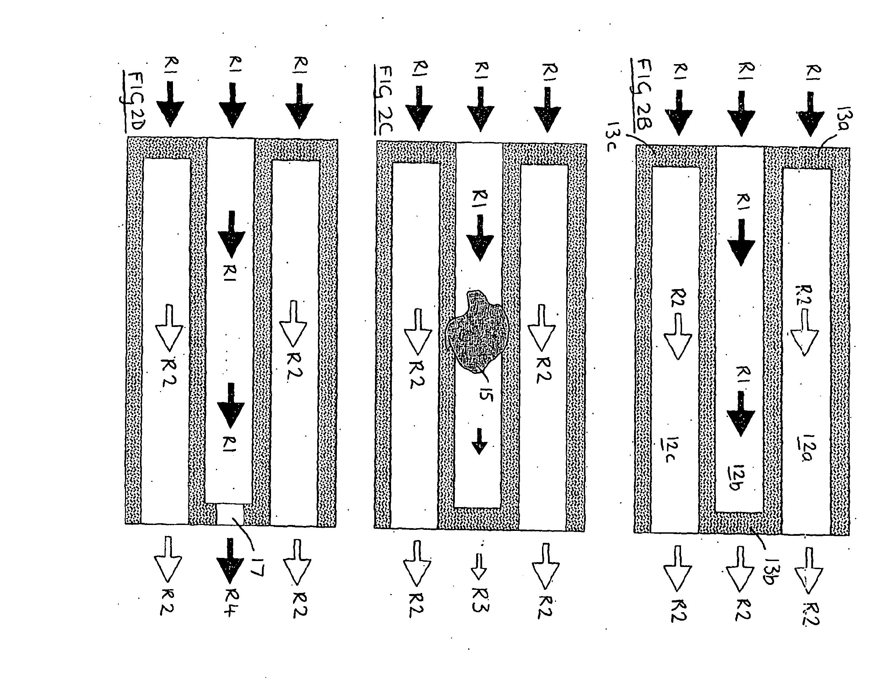

The filter 10 is supported such that its central axis X-X is on a straight line between the radiation source 20 and the radiation detector 22. This means that radiation emitted by the radiation source 20 can travel in a straight line through the channels 12 to the detector 22. The radiation also travels through the material of the filter 10, as described in more detail subsequently.
The radiation is represented by the arrows R in Fig. 2.

Referring to Figs 2B and 2D, there is illustrated part of a filter subject to the method of the invention.

Fig. 2B illustrates three undamaged channels 12 of the filter, whilst in Figs. 2C and 2D, the middle channel is damaged.

Referring to Fig. 2B, radiation R1 enters channels 12a, 12b and 12c of the filter 10. The radiation entering channels 12a and 12c is immediately attenuated by plugs 13a and 13c, to become radiation R2. The radiation R1 entering channel 12b is attenuated at the far end of the filter by plug 13b. Thus an equivalent level of radiation R2 exits each channel 12a to 12c.

In contrast, in Fig. 2C, channel 12b is blocked by a residual element 15 which also attenuates the radiation R1. Thus a lower level of radiation R3 exits the channel 12b.

In Fig. 2D, the plug 13b has been damaged and includes a hole 17.
Thus a greater amount of radiation R4 exits channel 12b.

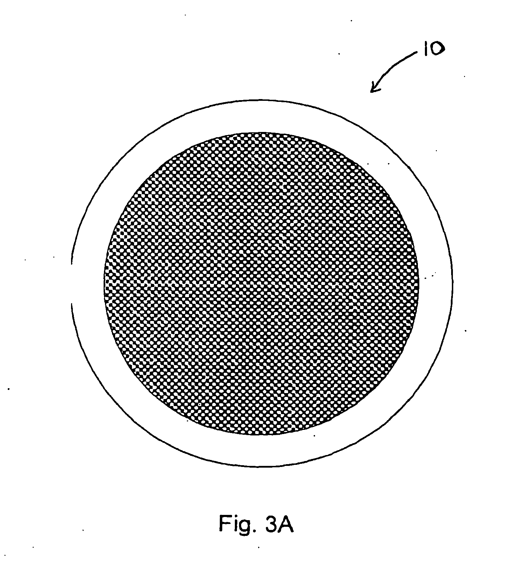

Referring to Fig 3A, there is illustrated a diagrammatic representation of the image of an undamaged, clean filter 10, as produced by the radiation detector 22 when radiation in the form of visible light is emitted by the radiation source 20, so as to pass through the filter 10. The light passes through the filter 10, producing lighter areas coinciding with the channels which are plugged at the ends near the light source (remote from the detector 22) and darker areas coinciding with the channels which are plugged at the ends nearest to the detector. When viewed as a whole, this gives the appearance of a chequerboard pattern as illustrated in Fig. 3A. The individual light and dark areas in the image are referred to as "cells".

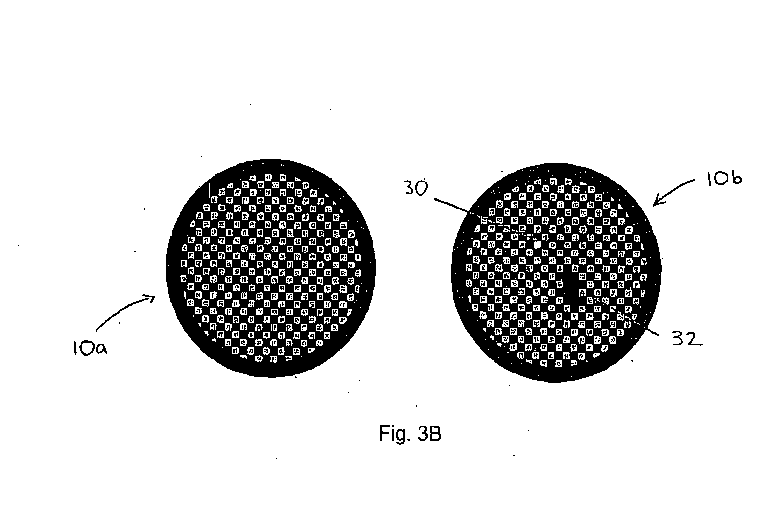

Fig. 3B illustrates an undamaged filter 10a on the left (with the number of cells reduced for clarity). The pattern may be seen to be uniform, with no irregularities. On the right, there is illustrated an image of a filter 10b which has sustained some damage. There is a light area 30 where a small area of the material of the filter 10b has burnt away. There is also a darker spot 32 where there should not be one, showing that there is a blockage in the filter.

The image of the end 16 of the filter may be captured by the radiation detector for subsequent analysis, as described in more detail hereinafter.

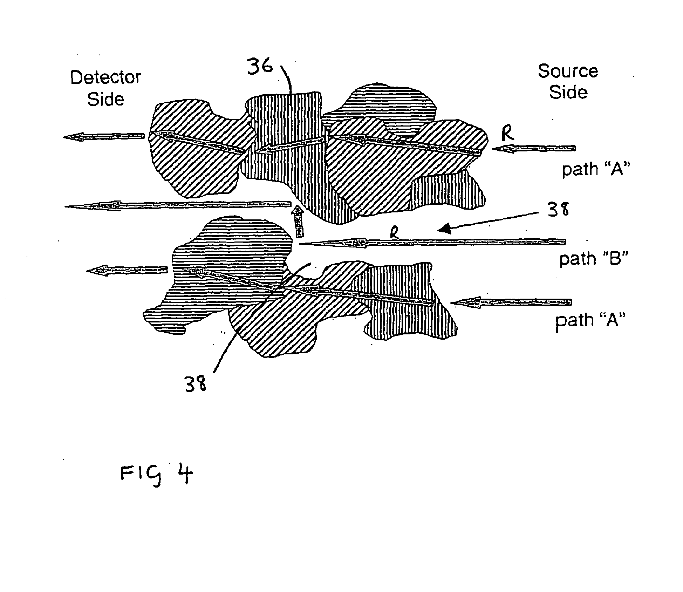

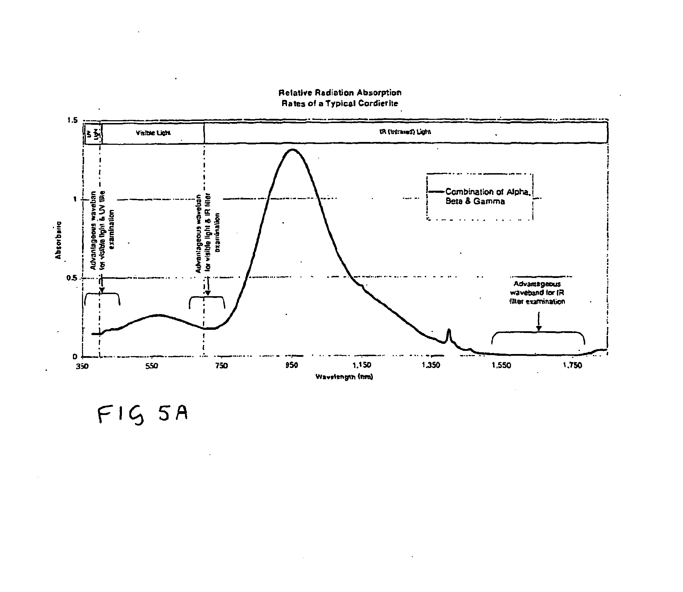

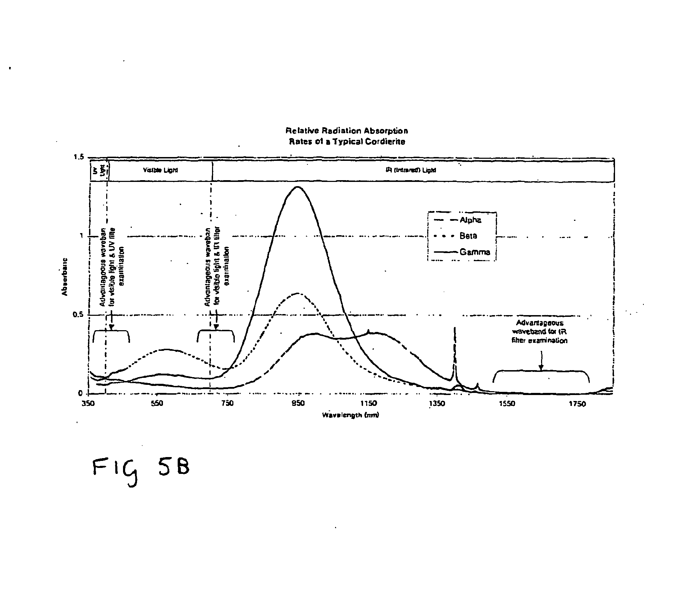

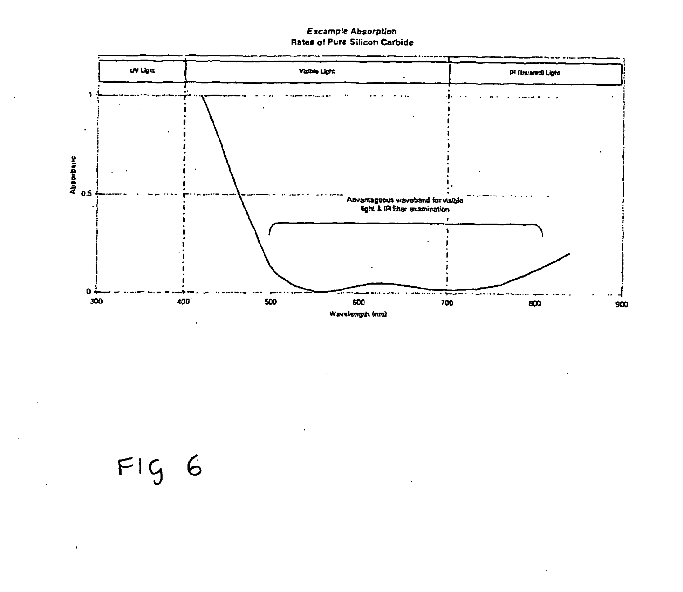

Referring to Fig. 4, there is shown diagrammatically the crystal structure of a porous material such as cordierite or silicon carbide from which the filter 10 would be made. Figs. 5a, 5b and Fig. 6 show the absorption rates of electromagnetic radiation for cordierite and silicon carbide. Referring to Fig. 4, in addition to radiation travelling through channels 12 of the filter 10, radiation also passes through the porous material of the walls 18 of the filter 10. There are two ways in which radiation travels through the material of the filter walls 18. The first is by passing through the crystal structure 36 of the material (path A) and the second is by the radiation reflecting off the internal walls of the pores 38 in the material (path B). The first way is made possible by the properties of the material the filter is constructed from. The second way is possible because the filter is deliberately constructed with porous walls to allow the easy flow of gas through these walls.

To examine the internal structure of the filter, radiation has to pass through the crystal structure of the filter material as well as through the channels. If radiation could not pass through the crystal structure of the filter, the plugged ends of the channels 12 would prevent light passing through the filter at all.

Cordierite has three principle phases, alpha, beta and gamma which each transmit radiation rather differently, as illustrated in Fig. 5a. Fig. 5b shows the absorption with the three phases combined. The radiation which passes through the material will be that which manages to pass through all three phases. This material property is exploited in the invention by selecting a radiation source that is least attenuated by the cordierite material.

Referring to Fig. 6, silicon carbide has a very different transmission profile to cordierite. Again, in the invention, the material properties would be exploited by using a radiation source which was effectively transmitted by silicon carbide.

For cordierite, the crystal structure is able to efficiently transmit radiation in the UV range 350 to 400 nm, the visible range 400 to 450 nm or 650 to 750 nm and the infrared range of 1400 to 1800 nm.

The silicon carbide, light in the 420 to 800 nm wavelength is transmitted, whilst UV light is blocked and so cannot be used for filter inspection.

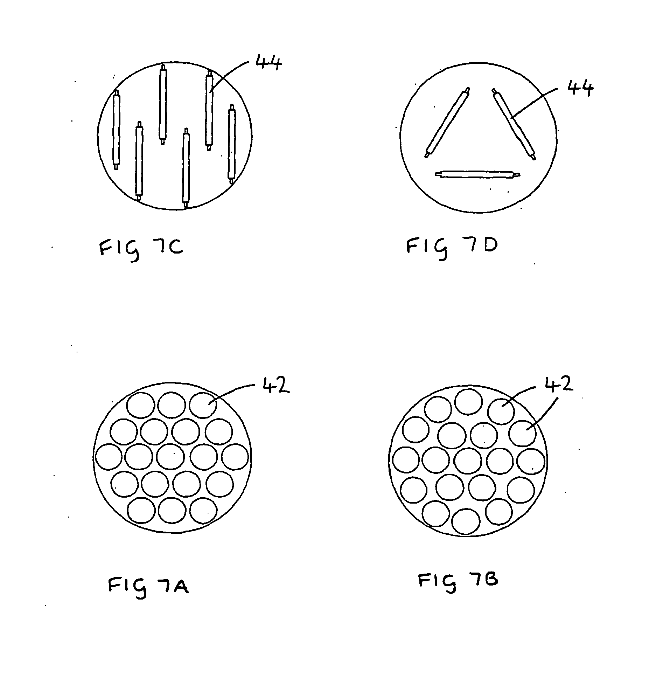

Figs. 7A to 7D illustrate possible radiation sources for the apparatus of Fig. 1. Fig. 7A illustrates an array of mirrored halogen lamps 42 arranged equidistant from one another and Fig. 7B illustrates an array of mirrored halogen lamps 42 positioned on a radius from the centre of the array. For visible light to pass through the filter 10, it is important for the wavelength emitted by the lamp to be matched to the wavelengths where the filter material best allows the transmission of visible light. For cordierite, transmission is best in the 400 to 450 nm range.

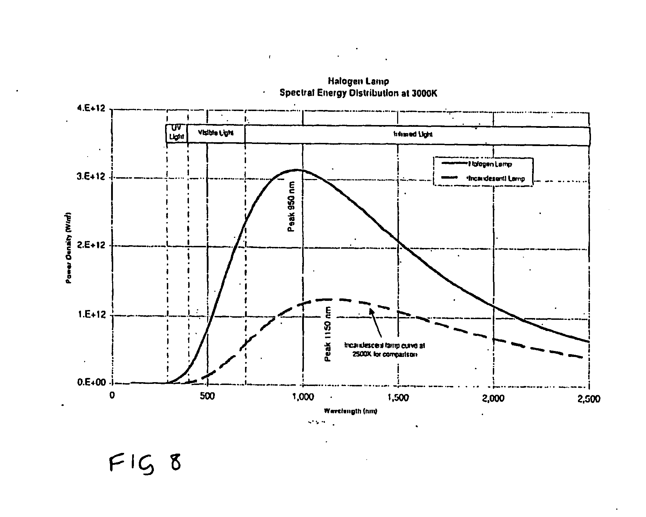

The higher the colour temperature of a lamp, the more light it emits at the higher wavelengths. Tungsten halogen lamps emit light at around 3000K and some light is emitted all the way into the UV range. The colour temperature spectrum for a typical halogen lamp is shown in Fig. 8 (the bold line). This high colour temperature makes tungsten halogen suitable for the invention. (The dotted line shows the spectral energy distribution of an incandescent lamp at 2500K, for comparison. This type of lamp does not produce enough light at the required frequencies to be well suited to the method of the invention).

Halogen mirror lamps have the same spectral colour advantages as other halogen lamps but also include an integral reflector. The reflector gives a number of optical advantages as it focuses the light on to the filter. This means that for the same power as other halogen lamps, more light arrives at the filter and is therefore transmitted through the filter. The small size of the lamp itself also allows the lamp to run at high temperatures making it more efficient at producing light. The tungsten halogen lamps may be arranged to provide an even illumination over the face of the filter as illustrated in Figs. 7A and 7B.

An alternative type of halogen lamp element that may be used to illuminate the filter is a halogen tube. This comprises an elongate lamp element 44, a plurality of which may be arranged in an array as illustrated in Figs. 7C and 7D.

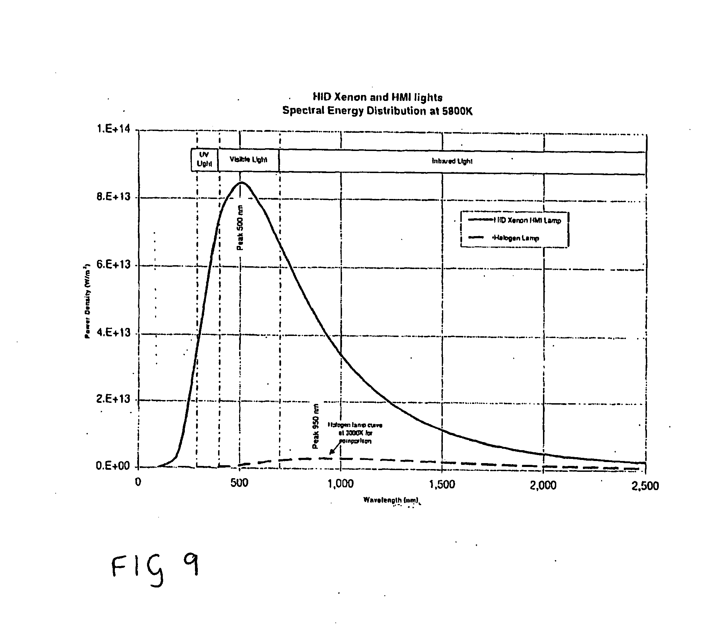

Alternatively, any of several versions of metal halide lamps may be used, including HID (high intensity discharge), xenon or HMI (Hydragyrom Medium Arc iodine) lamps. A typical spectrum for this type of lamp is shown in Fig. 9 (the bold line). When compared to halogen lamps (the dotted line in Fig. 9), it can be seen that the colour temperature of 5800K gives a spectral response closer to the shorter wavelength of the filter's absorption spectrum. The result is that a greater proportion of the light passes through the filter allowing defects to be detected more effectively. As a secondary consequence, less waste heat is produced, thus reducing the requirement for lamp cooling.

Laser diodes are an alternative radiation source. These are very efficient at producing a very narrow waveband of light from 20 to 10 nm wide. This means that the wavelength can be selected to match the filter material's absorption spectrum and so little light is wasted at other non-transmissible wavelengths. The beam that a laser produces is generally parallel and by scanning a bank of lasers or a single laser across the filter, the whole filter can be examined for defects. Possible scanning methods are described in more detail hereinafter.

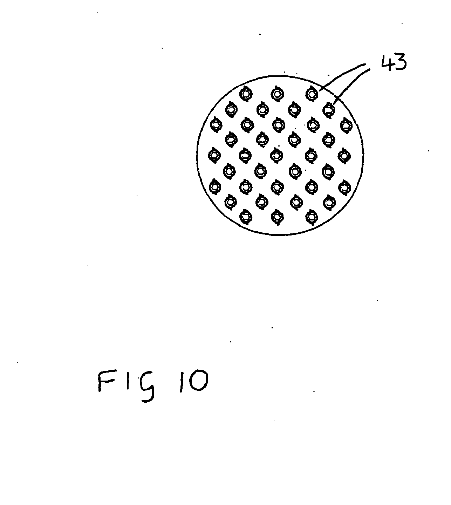

Alternatively, high power LEDs may be used as a source of radiation.
Because of the narrow band of wavelengths these devices emit, the colour of light can be tuned to match the characteristics of both the filter and the detector. The narrow band of light produced is one reason why LEDs are more efficient at producing light than most other types of illumination. It is important to arrange the high power LEDs in such a pattern that they give an even amount of illumination over the face of the filter. Both patterns shown in Fig. 7A and 7B can be used. One of these patterns is demonstrated with LEDs 43 in Fig. 10.

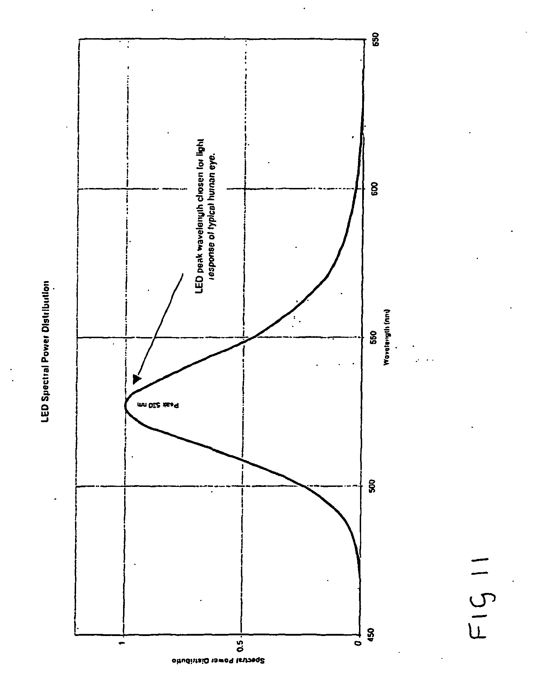

Fig. 11 shows the spectral power distribution of an LED with a peak wavelength chosen to match the light response of typical human eye.

Alternatively, radiation sources specifically designed to produce UV light may be used. The absorption properties of the filter show that less light energy is absorbed in the UV range of 350 to 400nm. Special UV lamps can be used to produce light at this wavelength, as can versions of LEDs and lasers.

Alternatively, radiation sources specifically designed to produce infrared light may be used. The absorption properties of the filter show that less radiation energy is absorbed in the infrared range of 650 to 700nm. Versions of LED and lasers are made that match this waveband. The filter absorbs least radiation in the infrared range of 1400 to 1800nm. Special heat lamps can be used to produce radiation at these wavelengths but also halogen lamps are an affective source of radiation in this waveband which can be seen in Fig. 8.

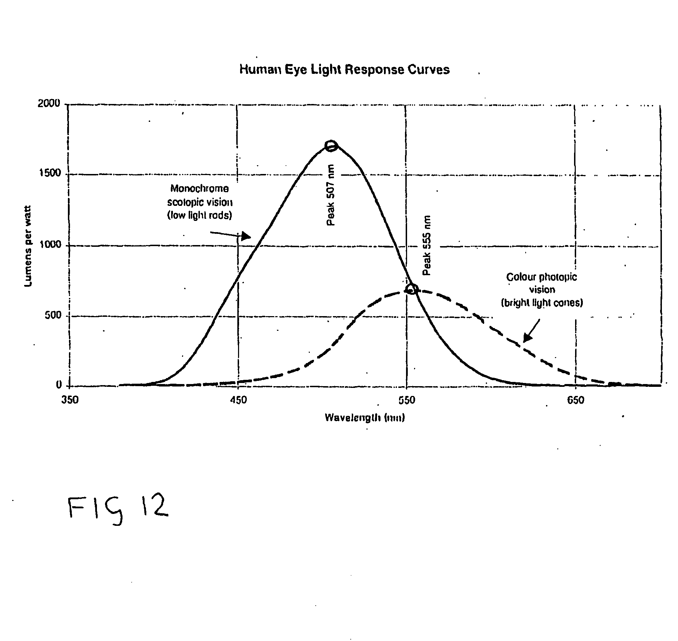

Turning to the radiation detector, schematically indicated at 22 in Fig. 2, this can simply be the human eye, which can be used to examine the filter. The human eye is unlike man made detectors in that it has a very nonlinear response to varying light levels. This is due to its iris, which keeps the light at a more consistent level at the photoreceptors. There are also two types of receptor, cones for bright light (colour vision) and rods for lower light level (monochrome). In the chart in Fig. 12 the monochrome response curve is shown as an unbroken line and the colour response curve is the dotted line. It can be seen that monochrome and colour vision respond to different wavelengths of light. As the filters absorb more light in the middle of the visible waveband than at the edges, the level of light the eye sees is low. Because of the low light level transmitted by the filter more of the monochrome vision is used than colour. It is therefore beneficial to optimise the light source to produce light in the 507 to 555nm wavelength.

An alternative detector 22 is a CCD (charge-coupled device) array camera. Such a camera is sensitive to the visible light range through to the near infrared at around 900nm. CCD cameras have the ability to detect very low light levels that are present after light has been transmitted through the filter. The image may also be easily viewed, recorded and processed on a computer or similar device.

One alterative to using a CCD array camera is a CMOS (Complementary metal-oxide semiconductor) array camera. These cameras are inexpensive but at present, the noise performance of most CMOS cameras makes them inferior to CCDs.

A focal plane array detector may be used, which is specifically designed for thermal infrared imaging and works at a waveband of 700 to 1400nm. This makes it ideally suited to exploit the filter properties of transmitting radiation in the infrared range of 1400 to 1800nm.

A very wide range of detectors is available that are capable of detecting either visible, infrared or UV radiation. These can be sourced as an individual packaged device or as linear arrays of several, or even hundreds, of detectors. Individual detectors must be moved over the end of the filter to form an image or overall record of the filter condition. Linear arrays can cover a much larger area of the filter end and so may only need movement perpendicular to the line of detectors, as described in more detail below.

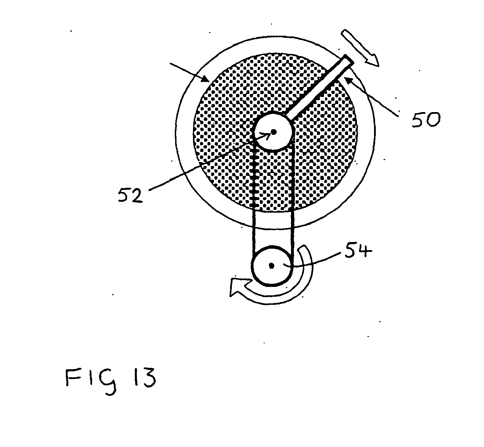

Referring to Fig. 13, an array of detectors is mounted on an arm 50.
This arm 50 is located at one end of the filter 10, on the central axis of the filter. By using a motor 54 or other form of motive power, the arm 50 can be rotated as indicated by the arrows so the detectors sweep over all of the filter end face. The radiation source may be of a fixed type covering the whole of the opposite face or may be moved in sync with the detector using a similar system. The arm need not be mounted to pivot about the central axis of the filter, provided it is positioned to sweep across the whole filter end face.

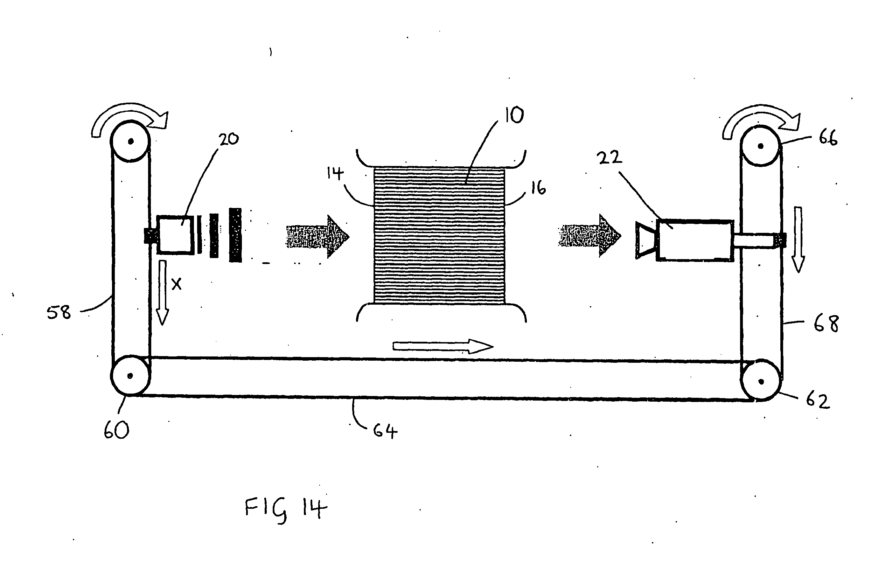

If a linear array of detectors is used then it is possible to scan the filter face in only one plane perpendicular to the linear array. Fig. 14 illustrates a scanning mechanism, which moves both the detector 22 and the radiation source 20 together across the respective ends 16 and 14 of the filter 10. The radiation source 20 is attached to a belt 58, which is moving as indicated by the arrow X. As this belt moves it rotates a pulley 60, which is attached to another pulley 62 via a belt 64. The second belt 64 and pulley 62 transmits its movement to a third pulley 66 and belt 68 on the other side of the filter. The detector 22 is attached to the third belt 68, such that movement of the detector 22 is directly linked to the movement of the radiation source 20. In the illustration this is all achieved by using a series of belts and pulleys but could be achieved equally by the use of shafts or synchronised motors. The radiation source 20 could alternatively also be of a fixed type covering the whole of the opposite face.

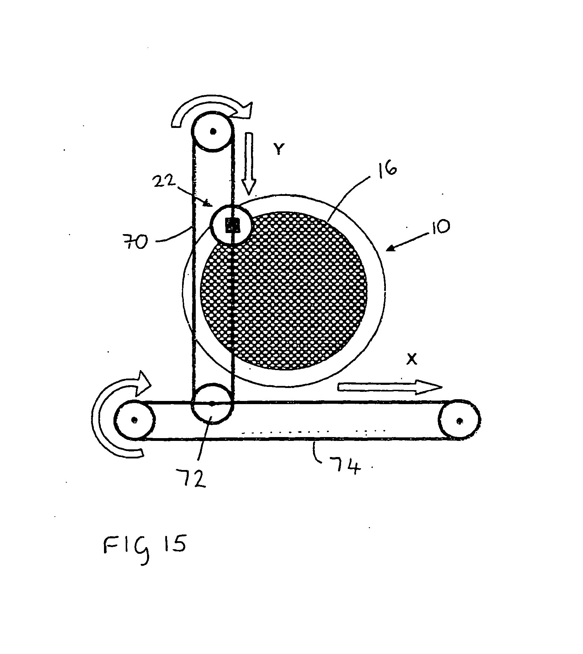

Fig. 15 illustrates a method and apparatus for scanning a single detector 22 or a group of detectors 22 across the end 16 of the filter 10. In the illustration this is achieved by using a series of belts and pulleys but could be achieved by using shafts or synchronised motors. In the illustration the detector 22 is mounted on one belt 70 which moves as indicated by arrow Y, allowing the detector to be moved vertically up and down. The vertical belt 70 and pulley 72 is attached to a horizontal belt 74, which moves as indicated by the arrow X, allowing the detector 22 and the vertical belt 70 and pulley 72 to be moved from side to side. The radiation source 20 may be of a fixed type covering the whole of the opposite end of the filter 10 or may be moved in sync with the detector 22 using a similar system.

The filter structure tends to make the radiation emitted almost parallel.

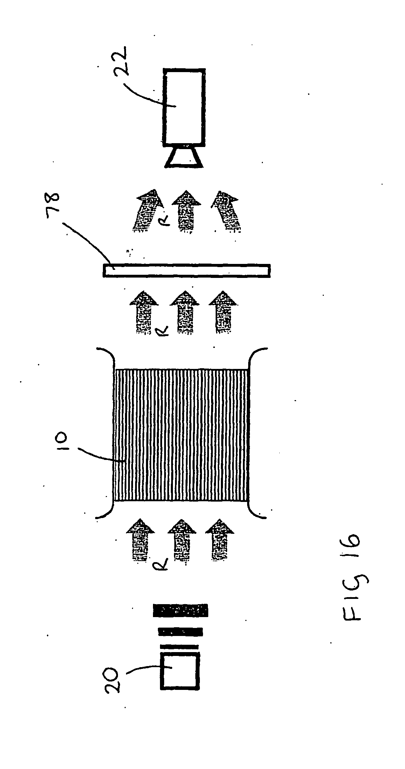

Fig. 16 illustrates an arrangement of components in a filter inspection apparatus similar to that of Fig. 2 but also including a screen 78 which converges the radiation which has been transmitted through the filter 10. The use of the screen allows the detector 22 to be positioned relatively close to the filter 10.

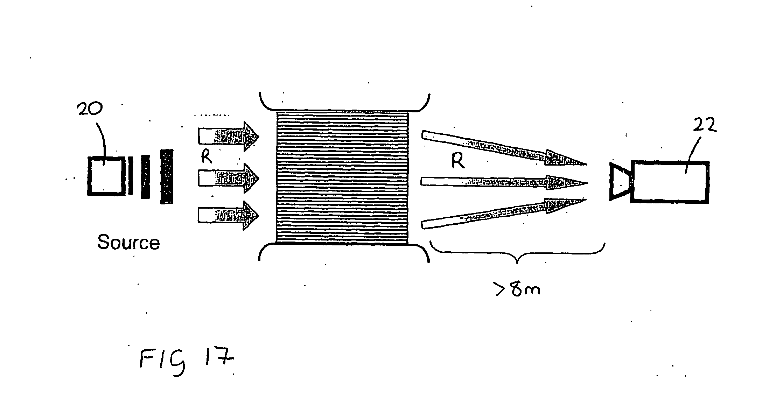

Fig. 17 illustrates an alternative arrangement in which the detector 22 is moved sufficiently far away from the filter 10 to view all radiation transmitted by the filter, in this instance over 8m away. In practice, radiation can be sent from the filter via a number of reflectors to the detector. This allows the detector to be located close to the filter whilst the radiation travels the necessary distance.

All of the above detection methods result in an image of the pattern of radiation transmitted through the filter 10, which may be analysed to determine whether the filter is fit for service. The analysis may be undertaken by a person simply inspecting the image of the filter. Alternatively, a computer may be used for the analysis.

Turning to the analysis of the image of the pattern of transmitted radiation, this can be performed visually by a person. A selection of filters may previously be tested to determine their suitability for use. From these, a set of boundary samples may be produced (samples just on the pass or fail side of the test results). These samples are then photographed, and used as a reference for training operators to carry out visual assessment.

Alternatively, computer software may be used to produce two or three dimensional images which may be assessed visually by an operator or analysis by the computer.

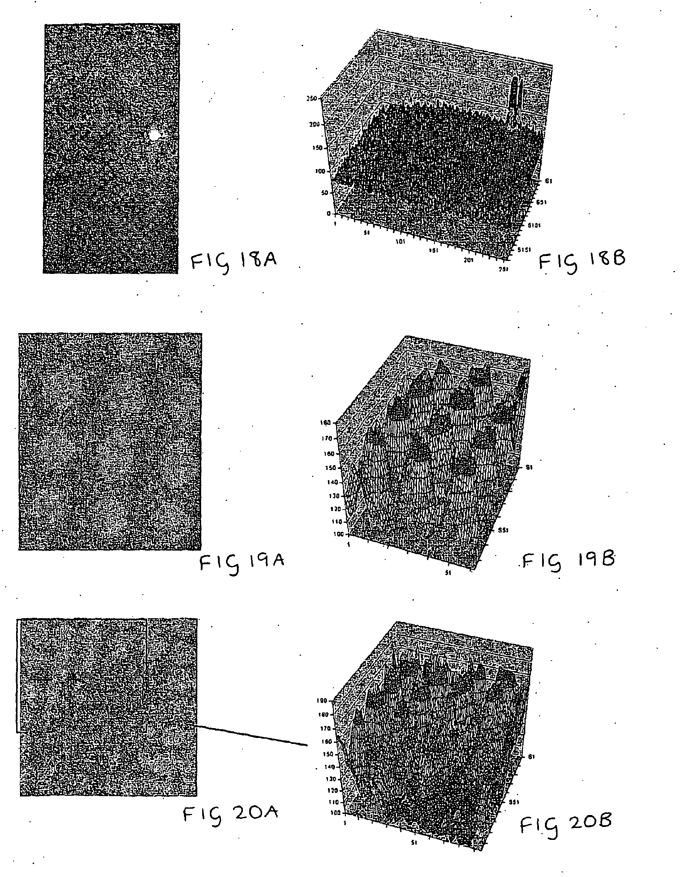

Figs. 18A and B, 19A and B and 20A and B illustrate images produced by the software. Fig. 18A is a two dimensional image of a filter face with a hole in it, and Fig. 18B is a computer generated three dimensional chart of the transmitted radiation for this filter. Fig. 19A is a two dimensional image of a good filter, and Fig. 19B is a three dimensional chart of the transmitted radiation for this filter. Fig. 20A is a two dimensional image of a filter with a blockage / exotherm and Fig. 20B is a three dimensional chart of the transmitted radiation for the filter.

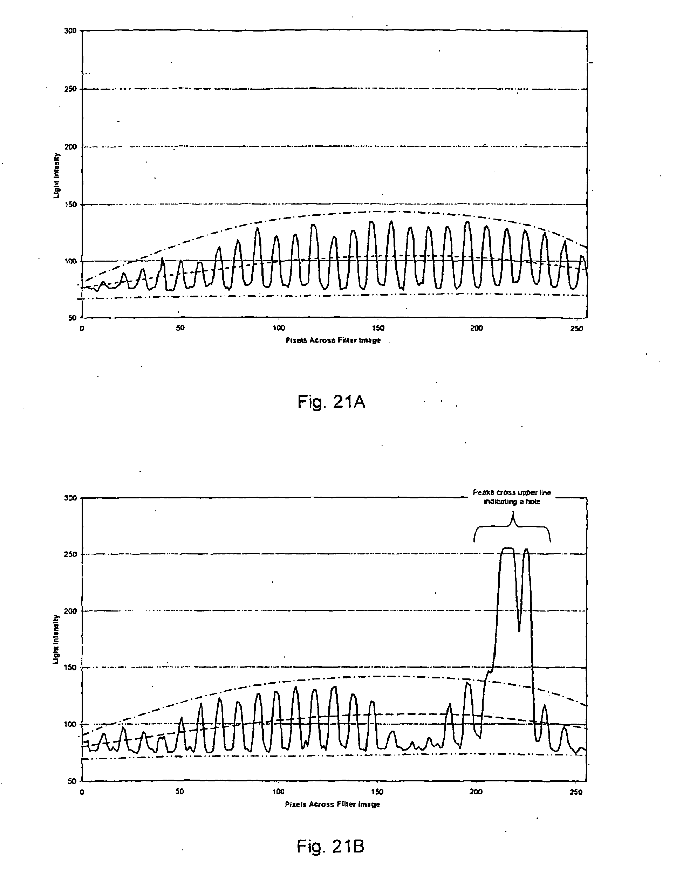

Computer techniques that can be use to determine good and bad filters can be based in part on:-
- Theoretical calculations based on the statutory soot emission limits and the rate at which soot would escape though a hole in the filter. Also the backpressure increase in the filter blockage and comparisons with acceptable limits.
- A selection of good and bad filters (from vehicles) may be tested to determine their suitability for use. Form these, a set of boundary samples may be selected (samples just on the pass and fail side of the tests). These samples may then be photographed and the images used to validate the software.
- Referring to Figs. 21A to 21 E, the software can use a combination of methods to identify good from bad cells.

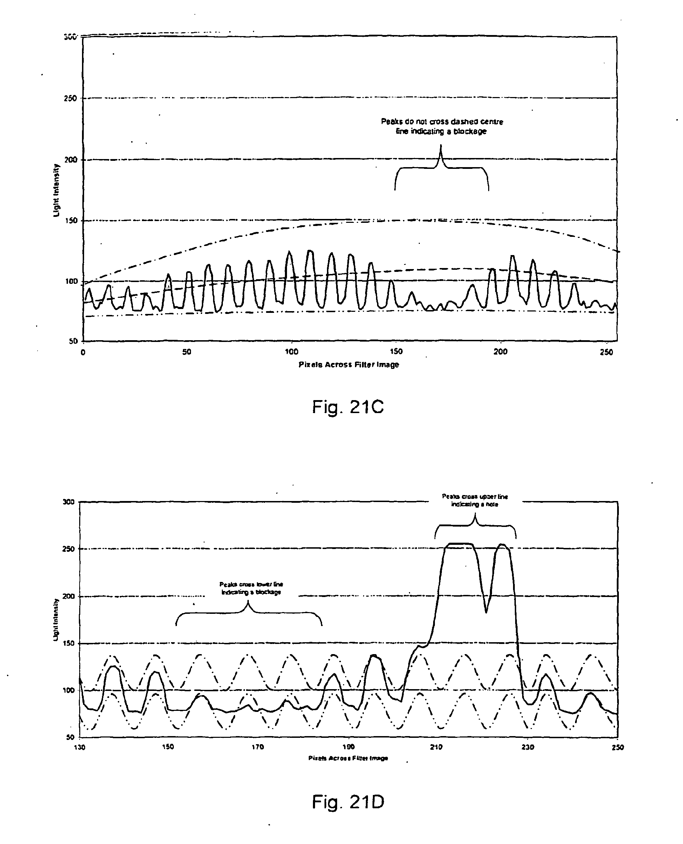

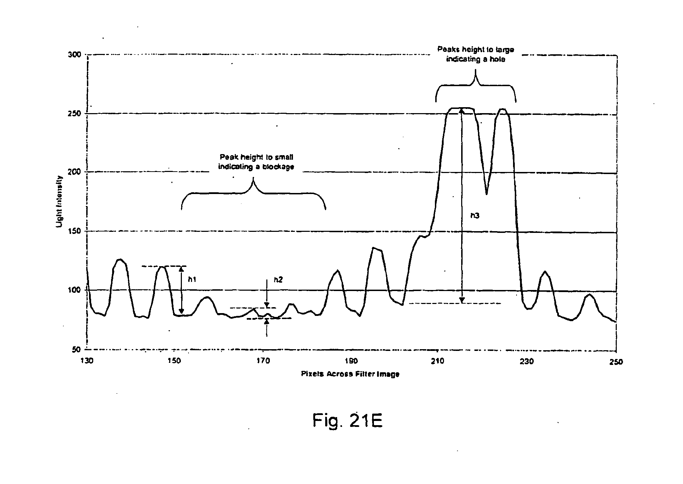

○ **Boundary detection**
   This is where the mid surface of a group of good cells is established. This surface may need to be shaped to conform to local variations. Based on this mid surface an upper and lower boundary can be set (Figure 21A). Should a cell or group of cells pass though these boundary surfaces then this area is a hole or a blockage / exotherm (Figure 21 B and 21C). The local sensitivity of this method can be increased by checking that each cell passes though the mid surface at the appropriate points. If the cell is below the mid surface then there is some small blockage and above the mid surface can indicate an area of a possible hole.
○ **Tolerance limits**
   In this method a theoretical surface is formed that follows the position and size of good cells and is extended over the whole filter face. From this surface an upper and lower surface is extracted. Any points in the image that lie above the upper surface indicate a hole whilst points below the lower surface indicate a blockage. Figure 21D is a 2D representation of this method.
○ **Height checking**
   This is where the height of the image of each cell is compared to the height of a group of good cells. Any cells whose height is above the maximum or minimum permitted tolerance indicate a problem. A blockage would be denoted by the mid point of this height being below the mid surface of the good cells. The reverse of this would indicate a hole (see Fig. 21 E).

Depending upon the extent of the damage to the filter 10, it may be classified as either a pass or a fail, or possibly a re-test.

It may be seen that in the illustrated embodiments the images produced by analysis are relatively complex including many different colours or tones, representing different amounts of transmission of radiation. This allows an accurate picture of the condition of the filter to be built up.

There is thus provided a simple and accurate method and apparatus for inspecting filters.

Various modifications may be made to the above described embodiments without departing from the scope of the invention as defined in the appended claims. For example, although the invention is particularly applicable to CR-DPFs, it may be used to inspect the condition of other filters. Although the invention has been described primarily with reference to wall flow filters including channels, other types and shapes of filters may also be inspected. The wavelength of the radiation would preferably be adjusted so that it was transmitted through the material of the filter. Many different alternatives of radiation source and radiation detector may be used, as may various alternative means of processing the images. For example a conventional film camera could be used in place of a digital camera. The screen 78 could be replaced with a large film plate across the face of the filter, allowing the direct capture of the filter images using UV, optical, infrared or x-ray radiation.

## Claims

1. A method of inspecting a filter (10) for a vehicle exhaust system, the method including the steps of providing a source of electromagnetic radiation (20), transmitting electromagnetic radiation through the filter (10), the method comprising detecting radiation which has been transmitted through the filter (10) to form an image of a pattern of transmitted radiation, the pattern of transmitted radiation providing an indication of the condition of the filter (10) **characterised in that** the image of the pattern of transmitted radiation includes shades of colour or tone representing varying extents of transmission of radiation through different parts of the filter.

2. A method according to claim 1 **characterised in that** the image includes a range of different colours or tones, each colour or tone representing a different amount of transmitted radiation.

3. A method according to any preceding claim **characterised in that** the filter is made of a porous crystalline material, and the source of electromagnetic radiation (20) is selected to produce frequencies of radiation which are transmitted through the crystals of the porous crystalline material, in addition to being transmitted through the pores.

4. A method according to any preceding claim **characterised in that** the filter is a wall flow filter (10) including elongate channels (12) running along its length, and the method includes the step of providing the source of radiation (20) at one end (14) of the filter (10), and detecting the pattern of transmitted radiation at the opposite end (16) of the filter (10), at least some of the detected radiation thereby having travelled along the direction of the channels (12).

5. A method according to any preceding claim **characterised in that** the electromagnetic radiation includes ultra violet light in the 350 to 400 nm range and/or visible light in the 400 to 450 nm and/or 650 to 700 nm range and/or infrared radiation in the 1400 to 1800 nm range.

6. A method according to any preceding claim **characterised in that** the electromagnetic radiation includes radiation in the 420 to 800 nm range, this including some visible and some infrared radiation.

7. A method according to any preceding claim **characterised in that** the method includes the step of providing an array of radiation sources such that radiation is provided for simultaneous transmission through the whole filter (10).

8. A method according to any of claims 1 to 6 **characterised in that** a single radiation source (20) or an array of radiation sources (20) insufficient to provide radiation for transmitting through the entire filter (10) is provided and the method includes the step of moving these radiation sources (20) to scan over the entire end (14) of the filter (10).

9. A method according to any preceding claim **characterised in that** the method includes the use of a focal plane array detector for detecting the pattern of transmitted radiation and forming the image, such a detector being sensitive to radiation with a wavelength of between 700 and 1400 nm, i.e. infrared radiation.

10. A method according to any of claims 1 to 8 **characterised in that** the method includes the step of using a camera to detect the pattern of transmitted radiation and form the image.

11. A method according to any preceding claims **characterised in that** the method includes the use of an array of detectors for simultaneously detecting radiation transmitted through substantially the whole filter (10).

12. A method according to any of claims 1 to 10 **characterised in that** the method includes the use of a single radiation detector, which is moved over the filter (10) to sequentially detect radiation which has been transmitted through different parts of the filter (10).

13. A method according to any of claims 1 to 10 **characterised in that** the method includes the use of a linear array of detectors (22), which are moved in one dimension only over the end (16) of the filter (10), preferably in a direction perpendicular to the length of the array, to sequentially detect radiation transmitted through different parts of the filter (10).

14. A method according to any preceding claim **characterised in that** the method further includes the step of analysing the image of the pattern of transmitted radiation to provide an indication of the.condition of the filter (10).

15. Apparatus for inspecting a filter (10) for a vehicle exhaust system, the apparatus including a source of electromagnetic radiation (20), and means for mounting the filter (24) such that radiation from the radiation source (20) may be transmitted through the filter (10) to form a pattern of transmitted radiation, a radiation detector (22) positioned to detect radiation transmitted through the filter (10) such that an image of a pattern of transmitted radiation is formed, the pattern of transmitted radiation providing an indication of the condition of the filter (10), **characterised in that** the radiation detector (22) is capable of forming an image of the pattern of detected radiation, the image including shades of colour or tone representing varying extents of transmission of radiation through the filter (10).

16. Apparatus according to claim 15 **characterised in that** the filter is made of a porous crystalline material, and the radiation source (20) is capable of producing frequencies of radiation which are transmitted through the crystals of the porous crystalline material, in addition to being transmitted through the pores.

17. Apparatus according to claim 15 or claim 16 **characterised in that** the radiation source (20), the mounting means (24) and the radiation detector (22) are positioned such that a wall flow filter (10) including elongate channels (12) running along its length may be mounted with the radiation source (20) at one end (14) of the filter (10) and the radiation detector (22) at the opposite end (16) of the filter (10), such that in use at least some of the detected radiation has travelled along the direction of the channels (12) of the filter (10).

18. Apparatus according to any of claims 15 to 17 **characterised in that** the radiation source includes a lamp (42, 44) or an array of lamps (42, 44), which may produce ultra violet, visible and/or infrared radiation.

19. Apparatus according to any of claims 15 to 18 **characterised in that** the apparatus includes an array of radiation sources (20) such that radiation may be provided for transmission through the whole filter element.

20. Apparatus according to any of claims 15 to 18 **characterised in that** the apparatus includes a single radiation source (20) or an array of radiation sources (20) insufficient to provide radiation for transmitting through the entire filter (10) and means for moving these radiation sources (20) to scan over the entire end (14) of the filter.

21. Apparatus according to any of claims 15 to 20 **characterised in that** the radiation detector (22) includes an array of individual detectors for simultaneously detecting radiation transmitted through substantially the whole filter (10).

22. Apparatus according to any of claims 15 to 21 **characterised in that** the radiation detector (22) includes a single detector (22), which may be moved over the filter to sequentially detect radiation which has been transmitted through different parts of the filter (10).

23. Apparatus according to any of claims 15 to 22 **characterised in that** the apparatus further includes a processor for analysing the pattern of transmitted radiation to provide an indication of the condition of the filter (10).

## Patentansprüche

1. Verfahren zur Inspektion eines Filters (10) für ein Fahrzeug-Auspuffsystem, wobei das Verfahren einen Schritt zum Bereitstellen einer Quelle für elektromagnetische Strahlung (20) und zum Übertragen elektromagnetischer Strahlung durch den Filter (10) hindurch aufweist, und wobei das Verfahren ein Erfassen von Strahlung aufweist, die durch den Filter (10) hindurch übertragen wurde, um ein Abbild eines Musters übertragener Strahlung zu erzeugen, wobei das Muster übertragener Strahlung einen Hinweis auf den Zustand des Filters (10) ergibt, **dadurch gekennzeichnet, dass** das Abbild des Musters übertragener Strahlung Farbnuancen und Farbtöne enthält, welche veränderliche Ausmaße der Übertragung von Strahlung durch unterschiedliche Teile des Filters hindurch repräsentieren.

2. Verfahren nach Anspruch 1, **dadurch gekennzeichnet, dass** das Abbild einen Bereich unterschiedlicher Farben oder Farbtöne enthält, wobei jede Farbe oder jeder Farbton einen unterschiedlichen Betrag an übertragener Strahlung repräsentiert.

3. Verfahren nach einem der vorhergehenden Ansprüche, **dadurch gekennzeichnet, dass** der Filter aus einem porösen kristallinen Material besteht und dass die Quelle für elektromagnetische Strahlung (20) derart ausgewählt wird, dass sie Strahlungsfrequenzen erzeugt, welche durch die Kristalle des porösen kristallinen Materials hindurch übertragen werden und außerdem durch die Poren hindurch übertragen werden.

4. Verfahren nach einem der vorhergehenden Ansprüche, **dadurch gekennzeichnet, dass** der Filter ein Wandströmungsfilter (10) ist, der entlang seiner Längsausdehnung verlaufende längliche Kanäle (12) enthält, wobei das Verfahren einen Schritt zum Bereitstellen der Strahlungsquelle (20) an einem Ende des Filters (10) und zum Erfassen des Musters übertragener Strahlung am entgegengesetzten Ende (16) des Filters (10) enthält, wobei zumindest ein Teil der dabei erfassten Strahlung sich entlang der Richtung der Kanäle (12) ausgebreitet hat.

5. Verfahren nach einem der vorhergehenden Ansprüche, **dadurch gekennzeichnet, dass** die elektromagnetische Strahlung ultraviolettes Licht im Bereich 350 bis 400 nm und/oder sichtbares Licht in den Bereichen 400 bis 450 nm und/oder 650 bis 700 nm und/oder Infrarotstrahlung im Bereich 1400 bis 1800 nm enthält.

6. Verfahren nach einem der vorhergehenden Ansprüche, **dadurch gekennzeichnet, dass** die elektromagnetische Strahlung Strahlung im Bereich 420 bis 800 nm enthält, wobei dies einen Teil sichtbarer und einen Teil infraroter Strahlung enthält.

7. Verfahren nach einem der vorhergehenden Ansprüche, **dadurch gekennzeichnet, dass** das Verfahren einen Schritt aufweist zum derartigen Bereitstellen einer Anordnung von Strahlungsquellen, dass Strahlung erzeugt wird, um durch den gesamten Filter (10) hindurch gleichzeitig übertragen zu werden.

8. Verfahren nach einem der Ansprüche 1 bis 6, **dadurch gekennzeichnet, dass** eine einzelne Strahlungsquelle (20) oder eine Anordnung von Strahlungsquellen (20) bereitgestellt wird bzw. werden, die nicht ausreicht bzw. nicht ausreichen, um Strahlung zur Übertragung durch den gesamten Filter hindurch zu erzeugen, und wobei das Verfahren einen Schritt zum Bewegen dieser Strahlungsquellen (20) enthält, um das gesamte Ende (14) des Filters (10) abzutasten.

9. Verfahren nach einem der vorhergehenden Ansprüche, **dadurch gekennzeichnet, dass** das Verfahren die Verwendung einer Brennebene-Detektoranordnung zum Erfassen des Musters übertragener Strahlung und Erzeugen des Abbildes aufweist, wobei ein solcher Detektor für Strahlung mit Wellenlängen zwischen 700 und 1400 nm, d.h. für Infrarotstrahlung, empfindlich ist.

10. Verfahren nach einem der Ansprüche 1 bis 8, **dadurch gekennzeichnet, dass** das Verfahren einen Schritt zum Verwenden einer Kamera aufweist, um das Muster übertragener Strahlung zu erfassen und das Abbild zu erzeugen.

11. Verfahren nach einem der vorhergehenden Ansprüche, **dadurch gekennzeichnet, dass** das Verfahren die Verwendung einer Anordnung von Detektoren aufweist zum gleichzeitigen Erfassen von Strahlung, die im wesentlichen durch den gesamten Filter (10) hindurch übertragen wurde.

12. Verfahren nach einem der Ansprüche 1 bis 10, **dadurch gekennzeichnet, dass** das Verfahren die Verwendung eines einzelnen Strahlungsdetektors aufweist, der über den Filter (10) bewegt wird, um sequentiell Strahlung zu erfassen, die durch verschiedene Teile des Filters (10) übertragen wurde.

13. Verfahren nach einem der Ansprüche 1 bis 10, **dadurch gekennzeichnet, dass** das Verfahren die Verwendung einer linearen Anordnung von Detektoren (22) aufweist, die nur in einer Dimension über das Ende (16) des Filters (10) bewegt werden, und zwar vorzugsweise in einer Richtung senkrecht zur Längsausdehnung der Anordnung, um sequentiell Strahlung zu erfassen, die durch verschiedene Teile des Filters (10) übertragen wurde.

14. Verfahren nach einem der vorhergehenden Ansprüche, **dadurch gekennzeichnet, dass** das Verfahren einen Schritt zum Analysieren des Abbildes des Musters der übertragenen Strahlung aufweist, um einen Hinweis auf den Zustand des Filters (10) bereitzustellen.

15. Vorrichtung zur Inspektion eines Filters (10) für ein Fahrzeug-Auspuffsystem, wobei die Vorrichtung aufweist: eine Quelle für elektromagnetische Strahlung (20) und ein Mittel zum Befestigen des Filters (24), so dass Strahlung von der Strahlungsquelle (20) durch den Filter (10) hindurch übertragen werden kann, um ein Abbild eines Musters übertragener Strahlung zu bilden, einen Strahlungsdetektor (22), der zur Erfassung von durch den Filter (10) hindurch übertragener Strahlung derart angeordnet ist, dass ein Abbild eines Musters übertragener Strahlung erzeugt wird, wobei das Muster übertragener Strahlung einen Hinweis auf den Zustand des Filters (10) ergibt, **dadurch gekennzeichnet, dass** der Strahlungsdetektor (22) in der Lage ist, ein Abbild des Musters erfasster Strahlung zu erzeugen, wobei das Abbild Farbnuancen und Farbtöne enthält, welche veränderliche Ausmaße der Übertragung von Strahlung durch den Filter (10) hindurch repräsentieren.

16. Vorrichtung nach Anspruch 15, **dadurch gekennzeichnet, dass** der Filter aus einem porösen kristallinen Material besteht und dass die Quelle für elektromagnetische Strahlung (20) in der Lage ist, Strahlungsfrequenzen zu erzeugen, welche durch die Kristalle des porösen kristallinen Materials hindurch übertragen werden und außerdem durch die Poren hindurch übertragen werden.

17. Vorrichtung nach Anspruch 15 oder 16,
**dadurch gekennzeichnet, dass** die Strahlungsquelle (20), das Befestigungsmittel (24) und der Strahlungsdetektor (22) derart angeordnet sind, dass ein Wandströmungsfilter (10), der entlang seiner Längsausdehnung verlaufende längliche Kanäle (12) enthält, mit der Strahlungsquelle (20) an einem Ende (14) des Filters (10) und mit dem Strahlungsdetektor (22) am entgegengesetzten Ende (16) des Filters (10) derart befestigt werden kann, dass im Betrieb zumindest ein Teil der erfassten Strahlung sich entlang der Richtung der Kanäle (12) des Filters (10) ausgebreitet hat.

18. Vorrichtung nach einem der Ansprüche 15 bis 17, **dadurch gekennzeichnet, dass** die Strahlungsquelle eine Lampe (42, 44) oder eine Anordnung von Lampen (42, 44) enthält, welche ultraviolette, sichtbare und/oder infrarote Strahlung erzeugen kann.

19. Vorrichtung nach einem der Ansprüche 15 bis 18, **dadurch gekennzeichnet, dass** die Vorrichtung eine Anordnung von Strahlungsquellen (20) enthält, so dass Strahlung zur Übertragung durch das ganze Filterelement hindurch erzeugt werden kann.

20. Vorrichtung nach einem der Ansprüche 15 bis 18, **dadurch gekennzeichnet, dass** die Vorrichtung eine einzelne Strahlungsquelle (20) oder eine Anordnung von Strahlungsquellen (20) enthält, die nicht ausreicht bzw. nicht ausreichen, um Strahlung zur Übertragung durch den gesamten Filter hindurch zu erzeugen, und ein Mittel zum Bewegen dieser Strahlungsquellen (20) enthält, um das gesamte Ende (14) des Filters (10) abzutasten.

21. Vorrichtung nach einem der Ansprüche 15 bis 20, **dadurch gekennzeichnet, dass** der Strahlungsdetektor (22) eine Anordnung einzelner Detektoren zur gleichzeitigen Erfassung von Strahlung enthält, die im wesentlichen durch den gesamten Filter (10) hindurch übertragen wurde.

22. Vorrichtung nach einem der Ansprüche 15 bis 21, **dadurch gekennzeichnet, dass** der Strahlungsdetektor (22) einen einzelnen Detektor (22) enthält, der über den Filter (10) bewegt werden kann, um sequentiell Strahlung zu erfassen, die durch verschiedene Teile des Filters (10) übertragen wurde.

23. Vorrichtung nach einem der Ansprüche 15 bis 22, **dadurch gekennzeichnet, dass** die Vorrichtung außerdem einen Prozessor zum Analysieren des Musters der übertragenen Strahlung enthält, um einen Hinweis auf den Zustand des Filters (10) bereitzustellen.

## Revendications

1. Procédé pour l'inspection d'un filtre (10) pour un système d'échappement de véhicule, le procédé comprenant les étapes consistant à fournir une source de rayonnement électromagnétique (20), émettre un rayonnement électromagnétique à travers le filtre (10), le procédé comprenant la détection d'un rayonnement qui a été émis à travers le filtre (10) pour former une image d'une configuration de rayonnement émis, la configuration du rayonnement émis apportant une indication concernant l'état du filtre (10) **caractérisé en ce que** l'image de la configuration du rayonnement émis comprend des nuances de couleurs ou tonalités représentant différents degrés d'émission de rayonnement à travers différentes parties du filtre.

2. Procédé selon la revendication 1, **caractérisé en ce que** l'image comprend un domaine de couleurs et de tonalités différentes, chaque couleur ou tonalité représentant une quantité différente de rayonnement émis.

3. Procédé selon l'une quelconque des revendications précédentes, **caractérisé en ce que** le filtre est fait d'un matériau cristallin poreux, et la source de rayonnement électromagnétique (20) est choisie pour produire des fréquences de rayonnement qui sont émis à travers les cristaux du matériau cristallin poreux, en plus d'être émis à travers les pores.

4. Procédé selon l'une quelconque des revendications précédentes, **caractérisé en ce que** le filtre est un filtre à passage de paroi (10) comprenant des canaux allongés (12) parcourant sa longueur, et le procédé comprend l'étape consistant à fournir la source de rayonnement (20) à une extrémité (14) du filtre (10), et à détecter la configuration de rayonnement émis à l'extrémité opposée (16) du filtre (10), au moins une partie du rayonnement détecté ayant circulé ainsi le long de la direction des canaux (12).

5. Procédé selon l'une quelconque des revendications précédentes, **caractérisé en ce que** le rayonnement électromagnétique comprend la lumière ultraviolette dans le domaine de 350 nm à 400 nm et/ou la lumière visible dans le domaine de 400 nm à 450 nm et/ou de 650 nm à 700 nm et/ou un rayonnement infrarouge dans le domaine de 1400 nm à 1800 nm.

6. Procédé selon l'une quelconque des revendications précédentes, **caractérisé en ce que** le rayonnement électromagnétique comprend un rayonnement dans le domaine de 420 nm à 800 nm, celui-ci comprenant une partie de rayonnement visible et une partie de rayonnement infrarouge.

7. Procédé selon l'une quelconque des revendications précédentes, **caractérisé en ce que** le procédé comprend l'étape consistant à fournir un réseau de sources de rayonnement de sorte que le rayonnement est fourni pour une émission simultanée à travers l'ensemble du filtre (10).

8. Procédé selon l'une quelconque des revendications 1 à 6, **caractérisé en ce qu'**une seule source de rayonnement (20) ou un réseau de sources de rayonnement (20) insuffisant pour fournir un rayonnement pour une émission à travers l'ensemble du filtre (10) est fourni et le procédé comprend l'étape consistant à déplacer ces sources de rayonnement (20) pour analyser l'ensemble de l'extrémité (14) du filtre (10).

9. Procédé selon l'une quelconque des revendications précédentes, **caractérisé en ce que** le procédé comprend l'utilisation d'un détecteur à réseau à plan focal pour détecter la configuration de rayonnement émis et pour former l'image, un tel détecteur étant sensible à un rayonnement d'une longueur d'onde comprise entre 700 nm et 1400 nm, c'est-à-dire un rayonnement infrarouge.

10. Procédé selon l'une quelconque des revendications 1 à 8, **caractérisé en ce que** le procédé comprend l'étape consistant à utiliser un appareil de prise de vue pour détecter la configuration de rayonnement émis et pour former l'image.

11. Procédé selon l'une quelconque des revendications précédentes, **caractérisé en ce que** le procédé comprend l'utilisation d'un réseau de détecteurs pour détecter simultanément un rayonnement émis à travers sensiblement l'ensemble du filtre (10).

12. Procédé selon l'une quelconque des revendications 1 à 10, **caractérisé en ce que** le procédé comprend l'utilisation d'un seul détecteur de rayonnement, qui est déplacé au-dessus du filtre (10) pour détecter séquentiellement un rayonnement qui a été émis à travers différentes parties du filtre (10).

13. Procédé selon l'une quelconque des revendications 1 à 10, **caractérisé en ce que** le procédé comprend l'utilisation d'un réseau linéaire de détecteurs (22), qui sont déplacés dans une direction uniquement à l'extrémité (16) du filtre (10), de préférence dans une direction perpendiculaire à la longueur du réseau, pour détecter séquentiellement un rayonnement émis à travers différentes parties du filtre (10).

14. Procédé selon l'une quelconque des revendications précédentes, **caractérisé en ce que** le procédé comprend en outre l'étape consistant à analyser l'image de la configuration de rayonnement émis pour apporter une indication concernant l'état du filtre (10).

15. Appareil pour inspecter un filtre (10) pour un système d'échappement de véhicule, l'appareil comprenant une source de rayonnement électromagnétique (20), et des moyens pour monter le filtre (24) de sorte que le rayonnement provenant de la source de rayonnement (20) peut être émis à travers le filtre (10) pour former une configuration de rayonnement émis, un détecteur de rayonnement (22) positionné pour détecter un rayonnement émis à travers le filtre (10) de sorte qu'une image d'une configuration de rayonnement émis est formée, la configuration de rayonnement émis apportant une indication concernant l'état du filtre (10), **caractérisé en ce que** le détecteur de rayonnement (22) est capable de former une image de la configuration de rayonnement détecté, l'image comprenant des nuances de couleurs ou tonalités représentant différents degrés d'émission de rayonnement à travers le filtre (10).

16. Appareil selon la revendication 15, **caractérisé en ce que** le filtre est fait d'un matériau cristallin poreux, et la source de rayonnement (20) est capable de produire des fréquences de rayonnement qui sont émis à travers les cristaux du matériau cristallin poreux, en plus d'être émis à travers les pores.

17. Appareil selon la revendication 15 ou la revendication 16, **caractérisé en ce que** la source de rayonnement (20), les moyens de montage (24) et le détecteur de rayonnement (22) sont positionnés de sorte qu'un filtre à passage de paroi (10) comprenant des canaux allongés (12) parcourant sa longueur peut être monté avec la source de rayonnement (20) à une extrémité (14) du filtre (10) et le détecteur de rayonnement (22) à l'extrémité opposée (16) du filtre (10), de sorte que lors de l'utilisation au moins une partie du rayonnement détecté a circulée le long de la direction des canaux (12) du filtre (10).

18. Appareil selon l'une quelconque des revendications 15 à 17, **caractérisé en ce que** la source de rayonnement comprend une lampe (42, 44) ou un réseau de lampes (42, 44), qui peuvent produire un rayonnement ultraviolet, visible et/ou infrarouge.

19. Appareil selon l'une quelconque des revendications 15 à 18, **caractérisé en ce que** l'appareil comprend un réseau de sources de rayonnement (20) de sorte que le rayonnement peut être fourni pour une émission à travers l'ensemble de l'élément de filtre.

20. Appareil selon l'une quelconque des revendications 15 à 18, **caractérisé en ce que** l'appareil comprend une seule source de rayonnement (20) ou un réseau de sources de rayonnement (20) insuffisant pour fournir un rayonnement pour une émission à travers l'ensemble du filtre (10) et des moyens pour déplacer ces sources de rayonnement (20) pour analyser l'ensemble de l'extrémité (14) du filtre.

21. Appareil selon l'une quelconque des revendications 15 à 20, **caractérisé en ce que** le détecteur de rayonnement (22) comprend un réseau de détecteurs individuels pour détecter simultanément un rayonnement émis à travers sensiblement l'ensemble du filtre (10).

22. Appareil selon l'une quelconque des revendications 15 à 21, **caractérisé en ce que** le détecteur de rayonnement (22) comprend un seul détecteur (22), qui peut être déplacé au-dessus du filtre pour détecter séquentiellement un rayonnement qui a été émis à travers différentes parties du filtre (10).

23. Appareil selon l'une quelconque des revendications de 15 à 22, **caractérisé en ce que** l'appareil comprend en outre un processeur pour analyser la configuration de rayonnement émis pour apporter une indication concernant l'état du filtre (10).
